# EUROPEAN PATENT APPLICATION

(11) **EP 2 565 620 A1**
(43) Date of publication of application: **06.03.2013**
(21) Application number: 11179579.5
(22) Date of filing: 31.08.2011
(51) Int. Cl.: G01N 19/02, B60T 8/172

(54) **A friction testing positioning device**

(71) Applicant: ASFT Industries AB, 271 73 Köpingebro (SE)
(72) Inventor: Graflind, Leif, 3656 Aeschlen ob Gunten (CH); Svensson, Håkan, 271 72 Köpingebro (SE)
(74) Representative: Persson, Albin

(57) **Abstract**

A friction testing positioning device (10) comprising a first wheel (12) rotatably mounted around a first axis (14) at a first end section of a transmission arm (16), said transmission arm (16) being pivotably mounted around a second axis (18), at least one second wheel (20) rotatably mounted around a third axis (22) at a second end of said transmission arm (16) and a transmission means (24) connecting said first axis (14) and said third axis (22), wherein said at least one second wheel (20) engages a substructure (26) and said first wheel (12) and said at least one second wheel (20) are being arranged to rotate at different speeds of rotation is disclosed. A first vertically adjustable displacement means (28) operates on said transmission arm (16) to rotate around said second axis (18) and to press said first wheel (12) into engagement with said substructure at a substantially constant vertical force.

A measuring transducer is provided for measuring a load appearing in said transmission means (24) as a result of a slip of said first wheel (12) on said substructure (26) and producing a signal specifying the friction between said first wheel (12) and the substructure (26).

## Description

### TECHNICAL FIELD

The present invention is directed to a road and runway surface friction coefficient measuring method and device therefor to be utilized in managing the surface of roads on which vehicles such as a car travel or of airport runways.

### PRIOR ART

Conventionally, the measurement of the road and runway surface friction coefficient for managing roads and airport runways was ordinarily conducted by running a measuring vehicle comprising a measuring device. Basically two types of measuring systems have been employed. A first system is based on a measuring apparatus that is connected to the rear part of a tractor or trailer vehicle. Such systems are disclosed in JP04102034 and in JP11326539.

In JP11326539 there is disclosed a four wheel trailer. One wheel is pressed against the road surface by the force of a spring. A load cell is arranged to detect force acting on the wheel when it is rotated on the road surface. A slide rate is then calculated on the basis of the detected force.

JP04102034 discloses a two wheel trailer. A first wheel is provided with a non-skid device while a second wheel is not. The wheels are provided with chain sprockets having different numbers of teeth and are connected by a chain. An idle pulley driven by the chain and connected to a load converter will be forced to move when there is a rotational force between the wheels. The load converter will indicate the friction between the second wheel and the road surface.

A trailer requires a very substantial towing vehicle and normally tends to be unstable at high vehicle speeds. This is a major drawback when a friction coefficient measuring device is used on runways at a speed more comparable with aeroplane speeds. High speed measurements also are desirable for measuring on normal roads.

A second type of system comprises in general a measuring apparatus provided in a wheeled vehicle. In US4098111 there is disclosed an apparatus comprising a raisable and lowerable, rotatably mounted measuring wheel which is in torque transmitting communication at a predetermined reduction with at least one of the ordinary wheels of the wheeled vehicle. At the measuring wheel a measuring transducer is mounted for detecting vertical and/or horizontal loads acting on the measuring wheel.

A similar apparatus is disclosed as prior art in US6427519. A measuring vehicle comprises a measuring device. A front-wheel-drive vehicle is remodeled and a measuring wheel for measuring the friction coefficient of the road surface is provided inside the rear trunk room. The measuring wheel comprises at the periphery thereof a tire having proximate characteristics of a tire of cars or aircraft that travel on the road surface, and is mounted on an axle of the travelling wheel via a support arm. The front end of the support arm is rotatably connected to the axle and the rear end thereof supporting the measuring wheel is vertically oscillatable.

The measuring wheel contacts the road surface pursuant to its own weight and the weight of the support arm at the time of measurement. Moreover, rotation of the rear travelling wheel is transmitted to the measuring wheel via a rotation transmission mechanism provided within the support arm. The travelling wheel rotates on the road surface without slipping. When the measuring wheel travels on the road surface while slipping, the rotational resistance incurred by the measuring wheel due to the friction with the road surface is detected by a torque detection means provided within the rotation transmission mechanism.

A computing device successively calculates the sliding friction of the road surface to the measuring wheel pursuant to the value detected by the torque detection means and the value of the vertical load of the measuring wheel on the road surface incurred by the support arm and its own weight.

An advantage with the system disclosed in US6427519 compared to systems using towing vehicles is that the weight of the towing vehicle is used to achieve a higher pressure on a measuring wheel resulting in higher accuracy in measurements. It normally also is easier to provide a system that can be lifted to a transporting position from a measuring position. However, prior art systems still suffer from instability and unreliability in the measuring process. Further improvements are desirable to provide better repeatability and better overall performance.

### SUMMARY OF THE INVENTION

In accordance with the invention there is provided a device and a method with improved functionality over prior art systems. A first wheel and at least one second wheel are connected by a transmission means so as to be rotated in a fixed relationship. There is a prescribed circumferential velocity difference between said first wheel and said second wheel. The first wheel is pressed downwards against a substructure such as a road or a runway of an airport. The pressure is provided by a first vertically adjustable displacement means operated to produce a substantially constant vertical force to act on said first wheel.

In various embodiments a second vertically adjustable displacement means is provided to lift said first wheel against the pressure of said first vertically adjustable displacement means. As a result said first wheel can be lowered and raised in a completely controlled manner even at comparatively high speeds. The force exerted by said second vertically adjustable displacement means preferably is substantially higher than the force exerted by said first vertically adjustable displacement means.

In various embodiments said first wheel is suspended from a support that comprises a spring biasing means. The spring biasing means is arranged to take up rapid vertical movements of the first wheel. Such movements may appear for instance when the first wheel hits an obstacle on the substructure.

In various embodiments the transmission means comprises a toothed belt arranged around a first belt sprocket mounted coaxially with said first wheel and around a second belt sprocket mounted coaxially with said second wheel. The number of teeth on said first sprocket can be different from the number of teeth on said second sprocket. As a result one or other of said first wheel and said second wheel will slip on the substructure and a tensional force will appear in the toothed belt. The tensional force is sensed by a load cell mounted on a jockey pulley engaging the toothed belt.

In various embodiments said first wheel acts as a measuring wheel and has a smaller outer diameter than said second wheel. A transmission means connects said measuring wheel with said second wheel. The transmission means is arranged to transfer a rotational movement of said second wheel to said measuring wheel without any slip. As a result said measuring wheel will slip on the substructure and a tensional force will appear in said transmission means. The tensional force is sensed by a load cell mounted on a jockey wheel engaging the transmission means.

The second wheel can be a wheel of a wheeled vehicle supporting the friction testing positioning device.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic side view of one embodiment of a friction testing positioning device in accordance with the invention in a transporting position,
- Fig. 2: is a schematic side view of the friction testing positioning device in Fig. 1 in a measuring position,

- Fig. 3: is a schematic side view of the friction testing positioning device in Fig. 1 in a measuring position during an exceptional load situation, and
- Fig. 4: is a schematic top view of a wheeled vehicle carrying a device in accordance with the invention.

### DETAILED DESCRIPTION

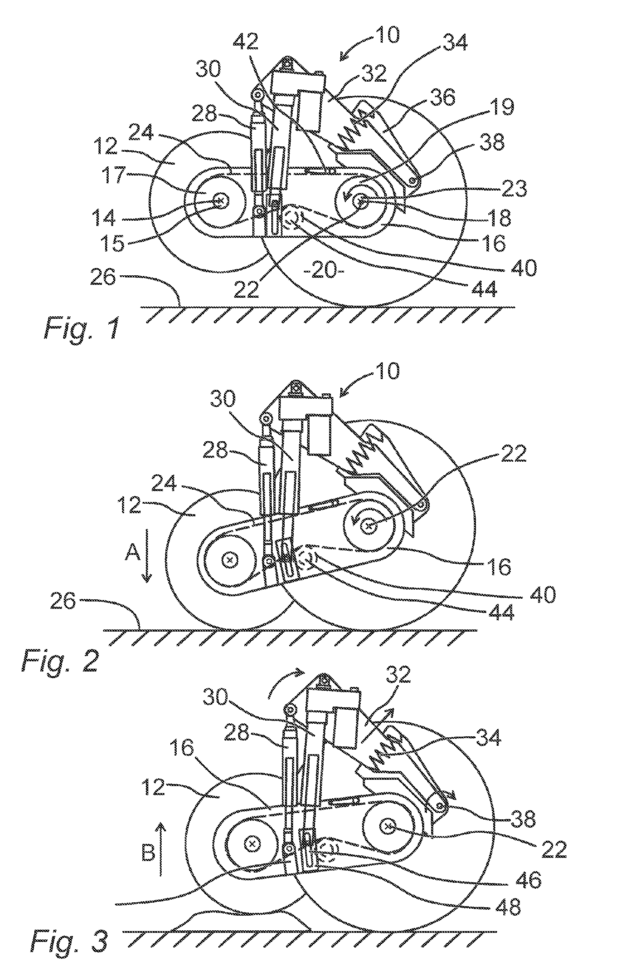

In the embodiment shown in Fig. 1 friction testing positioning device 10 comprises a first wheel 12 rotatably mounted around a first axis 14 at a first end section of a transmission arm 16. Said first wheel 12 is a measuring wheel and is non-rotatably secured to a first shaft 15 together with a first belt sprocket 17. Said first belt sprocket 17 is arranged in a first end of a transmission arm 16 which is pivotably mounted around a second axis 18. In Fig. 1 the device 10 is in a transport position where the transmission arm 16 is rotated to an upper position in which the first wheel 12 is lifted and at a specified distance from a substructure 26. The substructure can be a road surface or a runway.

A second wheel 20 is rotatably mounted around a third axis 22 and engages continuously the substructure 26. In the embodiment shown in Fig. 1 said second axis 18 is concentric with said third axis 22 and with a second shaft 23. The second shaft 23 supports also a further wheel (not shown) and forms a rear axle of a wheeled vehicle.

A first vertically adjustable displacement means 28 is pivotably connected to the transmission arm 16 at a position in the vicinity of said first axis 14. In the position of the device shown in Fig. 1 a second displacement means 30 counteracts said first displacement means 28 and prevents rotation of said transmission arm 16 around said second axis 18. Said first displacement means 28 as well as said second displacement means 30 are pivotably connected to a support arm 32. The support arm 32 is spring biased by a spring 34 to the position shown in Fig. 1. The spring 34 abuts on a rigidly fixed section 36 of the wheeled vehicle. The section 36 preferably is rigidly connected to the rear axle of the wheeled vehicle. The function of the spring 34 will be explained below with reference to Fig. 3. The support arm 32 is pivotally connected to the fixed section 36 in a fourth axis 38.

The transmission arm 16 comprises said transmission means 24, said first belt sprocket 17 and a second belt sprocket 19. Said transmission means 24 is forms together with said first belt sprocket 17 and said second belt sprocket 19 a transmission system that will ensure that said first shaft 15 will rotate in a fixed manner together with said second shaft 23. In the embodiment shown in Fig. 1 the transmission means 24 is a toothed belt providing a desired synchronous drive of the shafts. The toothed belt runs over a pulley wheel 40 and is kept at a desired tension by a jockey or belt stretcher 42.

Said pulley wheel 40 is supported by a load cell 44 that will detect tensional forces in the toothed belt 24. Higher tensional forces indicate higher friction coefficients because the first wheel will be more efficiently braked on a high friction surface. Since the first wheel 12 has a diameter that is different from the diameter of the second wheel 20 and since they are being connected by a synchronous transmission means the smaller wheel will slip on the substructure. Preferably the slip should correspond to a difference in speed of rotation, or in peripheral speed, of 11%-15%. More preferred is a difference in speed of rotation of approximately 13%. The same amount of slip can be achieved by using belt sprockets with different number of teeth or a combination of different sizes of wheels and different number of teeth.

In Fig. 2 a measuring position of the first wheel 12 is shown. This position is reached by lowering the force from the second displacement means 30 allowing the force from the first displacement means 28 to press the transmission arm 16 downwards. In various embodiments the first displacement means 28 maintains a predefined force on the transmission arm 16 during transport as well as during a measuring process. When said second displacement means 30 is lowered the transmission arm 16 will pivot around the third axis 22 to the shown position where the first wheel 12 is pressed against the substructure 26. In the embodiment shown in figures 1-4 said second displacement means 30 is electrically powered. In various embodiments a pneumatic or hydraulic displacement means is used.

When a wheeled vehicle supporting the device 10 is starting a measuring session the initial position is as shown in Fig. 1. During transportation the transmission arm 16 is pivoted and the first wheel is lowered in a well-controlled and smooth movement in the direction of arrow A. An interaction between said first displacement means 28 and said second displacement means 30 ensures a very smooth action. As a result of the differently sized wheels the first wheel will slip on the substructure.

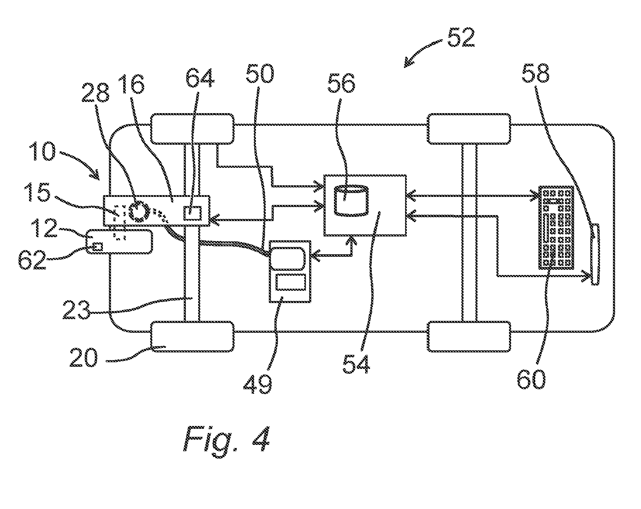

The slip causes a tensional force in the transmission means 24 directly corresponding to the friction coefficient of the substructure 26. The tensional force creates a load on the pulley wheel 40 and the load is sensed by the load cell 44. A value of the load is forms a basis for calculating in a central unit, c.f. Fig. 4, a friction coefficient value. During the complete measuring process the force from the first displacement means 28 constantly acts on the first wheel 12. The constant force also will ensure that the force exerted by the first wheel 12 on the substructure 26 is maintained at a predetermined value such as about 1000-1400 N (100-140 kg). As a result the friction coefficient value is proportional to the tensional force in accordance with the equation p= F/N, where p is the friction coefficient value, F is the horizontal force acting on a slipping wheel and N is the vertical force acting on a slipping wheel.

The first displacement means 28 is biased to maintain a constant pressure of the first wheel on the substructure 26. Since measurements are performed at comparatively high speeds a further shock absorbing feature is included. Should the device pass a bumpy section as illustrated in Fig. 3 the first wheel will be pressed upwards as shown by arrow B. During conditions where the first displacement means 28 does not respond in a flexible manner forces acting in the direction B will be absorbed by the spring 34. The forces acting on the first wheel 12 will force the support arm 32 to pivot around the fourth axis 38 as shown in Fig. 3 and the spring 34 will be compressed against the fixed section 36.

During operation a lower end of the second displacement means 30 is received in a slot 46 in a first bracket 48. The bracket 48 is rigidly attached to the transmission arm 16. In a normal operating position as shown in Fig. 2 said lower of the second displacement means 30 is located in a central position in said slot 46. As a result the transmission arm 16 may move upwards and downwards depending on movements of the first wheel 12. A lower end of the first displacement means 28 is pivotably connected to a second bracket 50. The second bracket 50 is rigidly attached to the transmission arm 16.

After completion of a measuring procedure the second displacement means 30 is again energized and the lower end thereof is raised. During an initial lifting distance said lower end slides in said slot 46. When an upper end of the slot 46 has been reached a continued lifting step will lift the transmission arm 16 and the first wheel 12 in a pivoting movement around said third axis 22. Also during the lifting step the first displacement means 28 advantageously is energized to provide a very controlled movement of the transmission arm 16 and the first wheel 12.

In various embodiments said first displacement means 28 is a gas spring and said second displacement means 30 is an electric linear actuator. As shown in Fig. 4 said first displacement means 28 is connected to a gas tank unit depicted at 49 in a conventional manner through a hose 50. A further reservoir can be provided to ensure that a constant pressure is maintained. Said second displacement means 30 is connected to an electric power source (not shown).

Fig. 4 also shows the basic layout of the device 10 in a wheeled vehicle 52. The transmission arm 16 extends from the second shaft 23 and supports the first shaft 15 and the first wheel 12. The second wheel 20 is one of two rear wheels of the vehicle 52. The device 10 is controlled by a central unit 54 comprising storage means 56. A plurality of measured data, such as speed, distance, temperature, pressure and friction coefficient value is stored and logged in the storage means during a measuring procedure. The central unit 54 is operatively connected to said first displacement means 28 and said second displacement means 30 for controlling their positions and for monitoring operating conditions such as pressure, forces and speed. In various embodiments the pressure in the gas spring constantly is measured and a signal corresponding to the measured value is transferred to the central unit 54. The central unit 54 controls the gas tank or a reservoir to adjust the amount of gas, so as to maintain a constant pressure. Signals dependent on forces acting on and measured by said load cell 44 are transferred to said central unit 54.

In various embodiments a sensor unit 62 is provided in the first wheel 12. The sensor unit 62 comprises a temperature transducer and a pressure transducer and is connected to the central unit 54 for providing measured values of temperature and pressure in the first wheel. The measured values are used to control the force acting on the first wheel and maintain a constant force. The sensor unit 62 can be connected to the central unit 54 through a coupling unit 64 as shown in Fig. 4. The connection between the sensor unit 62 and the coupling unit 64 can be a wireless connection.

A display unit 58 is operatively connected to the central unit 54 to present relevant data to an operator during driving and measuring. Commands from the operator are entered through an input means 60 operatively connected to the central unit 54.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A friction testing positioning device (10) comprising a first wheel (12) rotatably mounted around a first axis (14) at a first end section of a transmission arm (16), said transmission arm (16) being pivotably mounted around a second axis (18) separated from said first axis (14), at least one second wheel (20) rotatably mounted around a third axis (22) at a second end of said transmission arm (16) and a transmission means (24) connecting said first axis (14) and said third axis (22), wherein said at least one second wheel (20) engages a substructure (26) and said first wheel (12) and said at least one second wheel (20) are being arranged to rotate at different speeds of rotation, ***characterised* by**
a first vertically adjustable displacement means (28) operating on said transmission arm (16) to rotate around said second axis (18) and to press said first wheel (12) into engagement with said substructure, wherein said first vertically adjustable displacement means (28) maintains a substantially constant vertical force acting on said first wheel (12),
a measuring transducer measuring a load appearing in said transmission means (24) as a result of a slip of said first wheel (12) on said substructure (26) and producing a signal specifying the friction between said first wheel (12) and the substructure (26).

2. A friction testing positioning device (10) as claimed in claim 1, comprising a second vertically adjustable displacement means (30) operating on said transmission arm (16) to rotate around said second axis (18) and to lift said first wheel (12) from engagement with said substructure (26).

3. A friction testing positioning device (10) as claimed in any of the preceding claims, comprising
a pressurizing means producing said vertical force in said first vertically adjustable displacement means, wherein said pressurizing means maintains a substantially constant pressure.

4. A friction testing positioning device (10) as claimed in claim 2 or claim 3, comprising
a support arm (32) pivotably supporting said first vertically adjustable displacement means (28) and said second vertically adjustable displacement means (30), wherein said support arm (32) is biased by a spring means (34) so as to move resiliently when said first vertically adjustable displacement means (28) is forced to move.

5. A friction testing positioning device (10) as claimed in any of the preceding claims, wherein said transmission means (24) is a toothed belt running over a first belt sprocket (17) and over a second belt sprocket (19).

6. A friction testing positioning device (10) as claimed in claim 5, wherein said first belt sprocket (17) is non-rotationally connected to a first shaft (15) rotating around said first axis (14) and wherein said second belt sprocket (19) is non-rotationally connected to a second shaft (23) rotating around said second axis (18).

7. A friction testing positioning device (10) as claimed in any of the preceding claims, wherein said second axis (18) is concentric with said third axis (22).

8. A friction testing positioning device (10) as claimed in any of the preceding claims, wherein a second shaft (23) rotating around said third axis (22) is part of a wheeled vehicle supporting the friction testing positioning device (10).

9. A friction testing positioning device (10) as claimed in 5, comprising a belt stretcher (42) supported in said transmission arm (16) to maintain a predefined basic tension in said toothed belt.

10. A friction testing positioning device (10) as claimed in any of the preceding claims, wherein the different speeds of rotation between said first wheel (12) and said at least one second wheel (20) are set to correspond to a slip of said first wheel (12) of 11%-15%.

11. A friction testing positioning device (10) as claimed in any of the preceding claims, wherein the different speeds of rotation between said first wheel (12) and said at least one second wheel (20) are set to correspond to a slip of said first wheel (12) of approximately 13%.

12. A friction testing positioning device (10) as claimed in any of the preceding claims, comprising
a central unit (54) operatively connected to first displacement means (28) and said second displacement means (30) for controlling their positions.

13. A friction testing positioning device (10) as claimed in any of the preceding claims, comprising
a compressor and air tank unit (49) connected to a gas spring operating as said first displacement means (28).
